# EUROPEAN PATENT APPLICATION

(11) **EP 2 785 022 A1**
(43) Date of publication of application: **01.10.2014**
(21) Application number: 12851412.2
(22) Date of filing: 08.11.2012
(51) Int. Cl.: H04M 1/00, H04M 1/725, H04N 5/50, H04N 7/173

(54) **MOBILE COMMUNICATION TERMINAL, MOBILE COMMUNICATION METHOD, MOBILE COMMUNICATION PROGRAM, AND STORAGE MEDIUM**

(30) Priority: 24.11.2011 JP 2011256420
(71) Applicant: NTT DOCOMO, INC., Chiyoda-ku Tokyo 100-6150 (JP)
(72) Inventor: SASAKI, Makoto, Tokyo 100-6150 (JP); SHIKAMA, Hiroki, Tokyo 100-6150 (JP); HIGUCHI, Takeshi, Tokyo 100-6150 (JP)
(74) Representative: Maury, Richard Philip
(86) International application number: PCT/JP2012/079033
(87) International publication number: WO 2013/077196

(57) **Abstract**

A mobile communication terminal for receiving broadcasting waves of television broadcasting is disclosed, the mobile communication terminal including an azimuth direction obtaining unit configured to obtain an azimuth direction in which the mobile communication terminal is facing, a reception level detecting unit configured to detect a reception level of the broadcasting waves at the azimuth direction, a log retaining unit configured to retain as log information the reception level associated with the azimuth direction, a graph displaying unit configured to display a graph that has at least an axis of the azimuth direction and an axis of the reception level and that shows the reception level currently being detected and the reception level detected in the past in such a way that the reception level currently being detected is plotted in the central part of a screen of the mobile communication terminal, and a graph updating unit configured to update the graph according to a change of the azimuth direction in which the mobile communication terminal is facing or according to a change of the reception level.

## Description

### TECHNICAL FIELD

The present invention relates to a mobile communication terminal, a mobile communication method, a mobile communication program and a recording medium

### BACKGROUND ART

In many cases, horizontal polarization waves are used for television broadcasting. In the case where a mobile communication terminal receives television broadcasting, in general a rod antenna is used. Therefore, the antenna gain pattern (directional characteristics) of horizontal polarization waves for a broadcasting wave arrival direction forms a figure of eight, and creates an easy-to-receive-broadcasting-wave direction and a not-easy-to-receive-broadcasting-wave direction. Also, an easy-to-receive-broadcasting-wave direction does not necessarily correspond to the front face direction of the mobile communication terminal due to an antenna structure, an antenna position, etc.

### RELATED ART DOCUMENT

[PATENT DOCUMENT 1] Japanese Patent Application Publication No. 2009-303102
[PATENT DOCUMENT 2] Japanese Patent Application Publication No. 2008-160424

### SUMMARY OF THE INVENTION

### PROBLEM TO BE SOLVED BY THE INVENTION

In order to perform a stable reception, it is necessary for a user to match the easy-to-receive-broadcasting-wave direction with the broadcasting wave arrival direction. But because the user does not know the antenna gain pattern or the broadcasting wave arrival direction, it is difficult to determine the best receiving direction.

In patent document 1, a technology is disclosed which enables a user to recognize the changing of reception status values in a reception status graph in accordance with elapsed time in the case of searching for a state in which television broadcasting waves can be best received by gradually changing the antenna direction. In this technology, it is necessary for the user to adjust the direction of the terminal monitoring the changing of reception status values in order to search for the best receiving direction. But, because the reception status values change in accordance with the time sequence, the user cannot identify in which direction the terminal is directed when broadcasting waves are easily received.

In patent document 2, a device is disclosed which supports a user to adjust an antenna direction by displaying parameters related to a reception level on a screen. But, the same as patent document 1, because the reception status values change in accordance with the time sequence, the user cannot identify in which direction the terminal is directed when broadcasting waves are easily received.

It is an object of the present invention, in order to solve the above problems, to provide a mobile communication terminal that enables a user to identify a direction for receiving television broadcasting waves best.

### MEANS FOR SOLVING THE PROBLEM

In order to solve the above problems and to achieve the object, a mobile communication terminal according to the present invention is a mobile communication terminal for receiving television broadcasting waves including an azimuth direction obtaining unit configured to obtain an azimuth direction in which the mobile communication terminal is facing, a reception level detecting unit configured to detect a reception level of the broadcasting waves at the azimuth direction, a log retaining unit configured to retain as log information the reception level associated with the azimuth direction, a graph displaying unit configured to display a graph that has at least an axis of the azimuth direction and an axis of the reception level and that shows the reception level currently being detected and the reception level detected in the past in such a way that the reception level currently being detected is plotted in the central part of a screen of the mobile communication terminal, and a graph updating unit configured to update the graph according to a change of the azimuth direction in which the mobile communication terminal is facing or according to a change of the reception level.

### EFFECT OF THE PRESENT INVENTION

According to the present invention, a mobile communication terminal can be provided which enables a user to identify a direction for receiving television broadcasting waves best.

### BRIEF DESCRIPTION OF THE DRAWINGS

FIG. 1 is a drawing illustrating an overview of a system with a mobile communication terminal in an embodiment of the present invention.
FIG. 2 is a drawing illustrating an example of a hardware configuration of a mobile communication terminal in an embodiment of the present invention.
FIG. 3 is a drawing illustrating an example of a functional block diagram of a mobile communication terminal in an embodiment of the present invention.
FIG. 4 is a drawing illustrating an example of a display of a mobile communication terminal in an embodiment of the present invention.
FIG. 5A is a drawing illustrating an example of a graphic output of a mobile communication terminal in an embodiment of the present invention.
FIG. 5B is a drawing illustrating an example of a graphic output of a mobile communication terminal in an embodiment of the present invention.
FIG. 5C is a drawing illustrating an example of a graphic output of a mobile communication terminal in an embodiment of the present invention.
FIG. 5D is a drawing illustrating an example of a graphic output of a mobile communication terminal in an embodiment of the present invention.
FIG. 6 is a flowchart illustrating a process flow of a mobile communication terminal in an embodiment of the present invention.

### EMBODIMENTS FOR CARRYING OUT THE INVENTION

In the following, embodiments of the present invention will be described by referring to the accompanying drawings.
1. Overview
2. Hardware configuration
3. Functions
4. Examples of graphic outputs
5. Process flow

### (1. Overview)

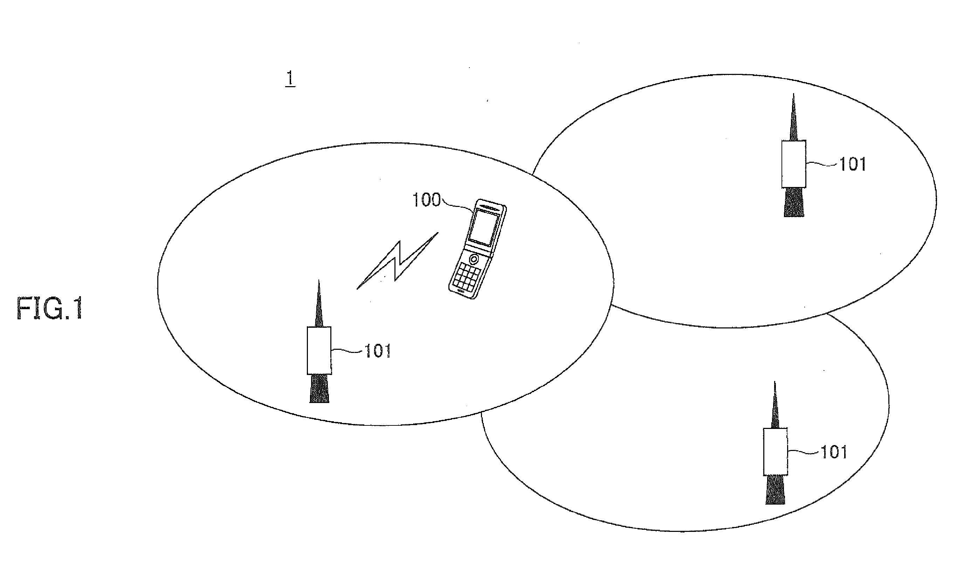

FIG. 1 shows an overview of a system 1 of a mobile communication terminal in an embodiment of the present invention. A system in FIG. 1 includes a mobile communication terminal 100, a broadcasting station 101 that transmits broadcasting waves related to television broadcasting, etc.

The mobile communication terminal 100 is a mobile communication terminal that is connected to a mobile communication network, and is capable of transmitting and receiving communication waves related to mobile communications. Also, the mobile communication terminal 100 is capable of receiving broadcasting waves broadcast from the broadcasting station 101 and is capable of playing motion picture contents. Television broadcasting, etc., include a one segment partial reception service for mobile phones and mobile terminals, so-called "one-seg broadcasting", and multimedia broadcasting in which voice and data communications are used together with images. Furthermore, the mobile communication terminal 100 is capable of obtaining a direction to which the mobile communication terminal 100 is facing by using a geomagnetic sensor (an electronic compass).

In general, a mobile communication terminal 100, which is capable of receiving television broadcasting, etc., includes a rod antenna for receiving broadcasting waves. Because the antenna's gain pattern forms a figure of eight, an easy-to-receive-broadcasting-wave direction and a not-easy-to-receive-broadcasting-wave direction are created. Also, it is known that, even for antennas other than a rod antenna, an easy-to-receive-broadcasting-wave direction and a not-easy-to-receive-broadcasting-wave direction are created because of an influence of a human body, etc. Therefore, in order to obtain an antenna gain sufficient for receiving and playing broadcasts, it is necessary for a user of the mobile communication terminal 100 to adjust the direction of the mobile communication terminal 100. At this point, information of reception level (reception quality) of broadcasting waves received at the antenna can be utilized. As an index for indicating reception levels, all indexes can be used such as an error rate of signals, an SN ratio (Signal to Noise Ratio), and a CN ratio (Carrier to Noise Ratio) that indicate reception quality. Here, an example will be described in which the reception level is divided into five levels of 0 through 3 and outside-the-range according to error rates of signals included in broadcasting waves. The user, monitoring the reception level of broadcasting waves displayed on the screen, changes the direction of the mobile communication terminal 100 and searches for a direction in which the reception level becomes the highest. Here, the mobile communication terminal 100, associating directions and reception levels obtained since the starting of such a search, stores them as a log. And, in the case of displaying the current direction and the reception level, the log is also displayed on the screen as a graph so that a transition of reception levels according to directions becomes visible. By this, the user searching for the best reception direction of broadcasting waves can visually understand to what extent the reception level has improved or been degraded by directing the mobile communication terminal 100 to the current direction.

Also, in order to receive broadcasting waves appropriately, not only a direction needs to be appropriate but also a way of holding the mobile communication terminal 100 by the user and a position of the antenna, etc., need to be appropriate. The mobile communication terminal 100 provides the user with guidance for an appropriate way of holding and an appropriate position of the antenna.

The broadcasting station 101 transmits broadcasting waves related to television broadcasting, etc. As shown in FIG. 1, one of the broadcasting stations 101 exists in each area. Locations of the broadcasting stations 101 and areas served by the broadcasting stations 101 are given.

According to a mobile communication terminal 100 in an embodiment of the present invention, a user searching for the best reception direction of broadcasting waves can visually understand to what extent the reception level has improved or become degraded by directing the mobile communication terminal 100 to the current direction. As a result, it becomes easier for a user to identify a direction for receiving television broadcasting waves best. Also, a user is provided support to hold the mobile communication terminal in a way in which the reception level becomes the best, provided support to set an antenna in an appropriate position, and provided support to be able to receive broadcasting waves the best.

### (2. Hardware configuration)

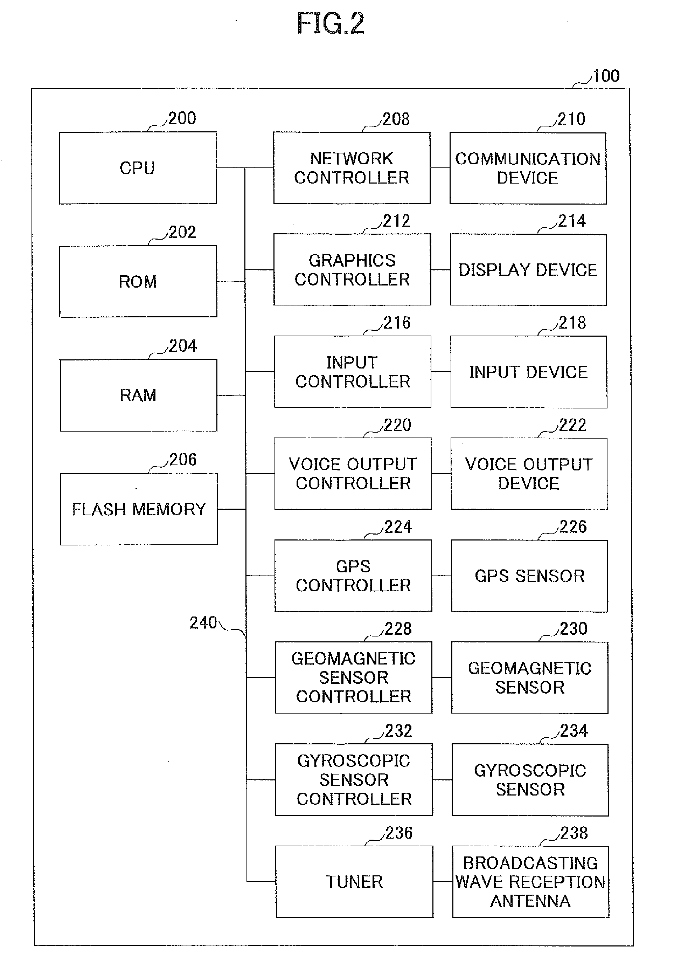

Using FIG. 2, an example of a hardware configuration of a mobile communication terminal 100 in an embodiment of the present invention will be described.

The mobile communication terminal 100 in an embodiment of the present invention includes a CPU 200, a ROM 202, a RAM 204, a flash memory 206, a network controller 208, a communication device 210, a graphics controller 212, a display device 214, an input controller 216, an input device 218, a voice output controller 220, a voice output device 222, a GPS controller 224, a GPS sensor 226, a geomagnetic sensor controller 228, a geomagnetic sensor 230, a gyroscopic sensor controller 232, a gyroscopic sensor 234, a tuner 236, a broadcasting wave reception antenna 238 and a bus 240.

The CPU 200 performs operational control of a mobile communication program executed by the mobile communication terminal 100 in an embodiment of the present invention. The ROM 202 stores an OS, data, etc., needed for operations of the mobile communication program executed by the CPU 200. The RAM 204 constitutes a work area of the CPU 200, etc. The flash memory 206 stores locations of the broadcasting stations 101, broadcasting wave reception characteristics information of the mobile communication terminal 100, user data, etc. The broadcasting wave reception characteristics information includes easy-to-receive-broadcasting-wave directions, information on how to hold the mobile communication terminal 100, and information on an appropriate position of the antenna. The network controller 208 performs communication control for communicating through the communication device 210 such as an antenna for mobile communication, etc. The graphics controller 212 performs control for displaying the screen for the user of the mobile communication terminal 100 through the display device 214 such as a liquid crystal display, etc. The input controller 216 controls signals inputted by the user through the input device 218 such as buttons, a touch screen, etc. The voice output controller 220 controls the voice output device 222 such as a speaker, etc., in order to output voice sounds. The GPS controller 224 controls the GPS sensor 226 in order to obtain location information of the mobile communication terminal 100. The geomagnetic sensor controller 228 controls the geomagnetic sensor 230 in order to obtain an azimuth direction of the mobile communication terminal 100. The gyroscopic sensor controller 232 controls the gyroscopic sensor in order to obtain a change of an angle of the mobile communication terminal 100 by measuring angular velocities. The tuner 236 receives broadcasting waves through the broadcasting wave reception antenna 238. The bus 240 connects the devices described above and performs the data exchange.

According to the configuration described above, the mobile communication terminal 100 in an embodiment of the present invention can display on the screen directions and reception levels of the current and the past as a graph, and can support searching for an appropriate direction by the user. Also, by displaying on the screen how to hold the mobile communication terminal 100 and how to position the antenna, it becomes possible for the user to receive broadcasting waves appropriately.

Note that the GPS controller 224 and the GPS sensor 226 are optional configuration elements.

Also, although the gyroscopic sensor controller 232 and the gyroscopic sensor 234 are effective in the case where the guidance of the status of holding the terminal by hand is described three dimensionally, in the case where it is described two dimensionally, the gyroscopic sensor controller 232 and the gyroscopic sensor 234 may not be included. In this case, a change of the azimuth direction is detected by the geomagnetic sensor controller 228 and the geomagnetic sensor 230.

### (3. Functions)

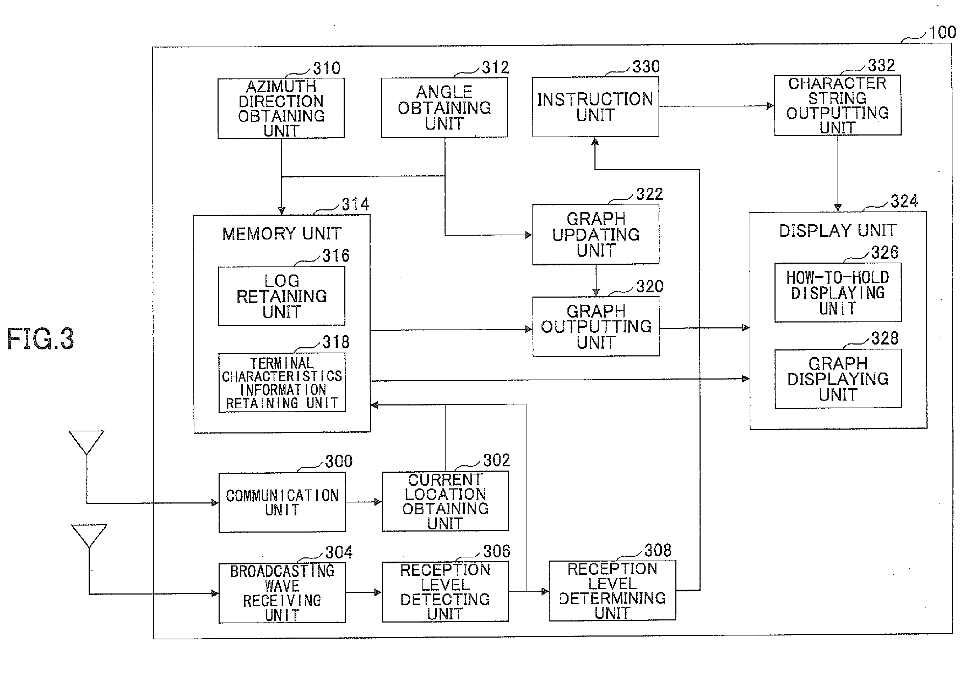

Using FIG. 3, an example of functional blocks of the mobile communication terminal 100 will be described.

The mobile communication terminal 100 in an embodiment of the present invention includes a communication unit 300, a current location obtaining unit 302, a broadcasting wave receiving unit 304, a reception level detecting unit 306, a reception level determining unit 308, an azimuth direction obtaining unit 310, an angle obtaining unit 312, a memory unit 314, a log retaining unit 316, a terminal characteristics information retaining unit 318, a graph outputting unit 320, a graph updating unit 322, a display unit 324, a how-to-hold displaying unit 326, a graph displaying unit 328, an instruction unit 330 and a character string outputting unit 332.

The communication unit 300 transmits and receives communication waves used for mobile communication systems or mobile communications such as a wireless LAN, etc. Also, the communication unit 300 receives signals from GPS satellites.

The current location obtaining unit 302 obtains the current location of the mobile communication terminal 100 based on the communication waves received by the communication unit 300 or signals from the GPS satellites. In order to obtain the current location by using communication waves, known technologies such as, for example, a location detection technology using the wireless LAN, a location detection technology using an ID of a base station that transmits communication waves in a mobile communication system, etc., can be used. Also, a known technology in which the current location is obtained based on signals from GPS satellites can be used. Obtained location information is expressed in, for example, two-dimensional or three-dimensional coordinates.

The broadcasting wave receiving unit 304 receives broadcasting waves related to television broadcasting, etc.

The reception level detecting unit 306 obtains a reception level of broadcasting waves received by the broadcasting wave receiving unit 304. The reception level is an index indicating reception quality of the broadcasting waves, and is divided into, for example, a total of 5 levels of 0 through 3 and outside-the-range based on, for example, error rates of information received through broadcasting waves. In this case, 3 means the lowest error rate. The reception level is not limited to this example, but can be expressed by using any index indicating reception quality of broadcasting waves.

The reception level determining unit 308 determines whether the reception level obtained by the reception level detecting unit 306 is higher than a predefined threshold value. The predefined threshold value indicates, for example, the minimum required reception level for restoring and playing the contents included in the broadcasting waves. Or, the predefined threshold value may be set at a reception level in which the contents can be played with user desired quality.

The azimuth direction obtaining unit 310 obtains the azimuth direction in which the mobile communication terminal 100 is facing based on a geomagnetic vector of x, y axes or x, y, z axes obtained by the geomagnetic sensor 230. Because a method of calculating an azimuth direction from a geomagnetic vector varies with the geomagnetic sensor 230, the description here is omitted.

The angle obtaining unit 312 obtains a change of the angle of the mobile communication terminal 100 based on angular velocities obtained from the gyroscopic sensor 234.

The memory unit 314 includes the log retaining unit 316 and the terminal characteristics information retaining unit 318, and is used for storing data used by the mobile communication terminal 100.

Once the searching of an appropriate direction of the mobile communication terminal 100 at a certain location by the user starts, thereafter the log retaining unit 316, associating azimuth directions obtained by the azimuth direction obtaining unit 310 with reception levels obtained by the reception level detecting unit 306, retains them. The current location is obtained by the current location obtaining unit 302.

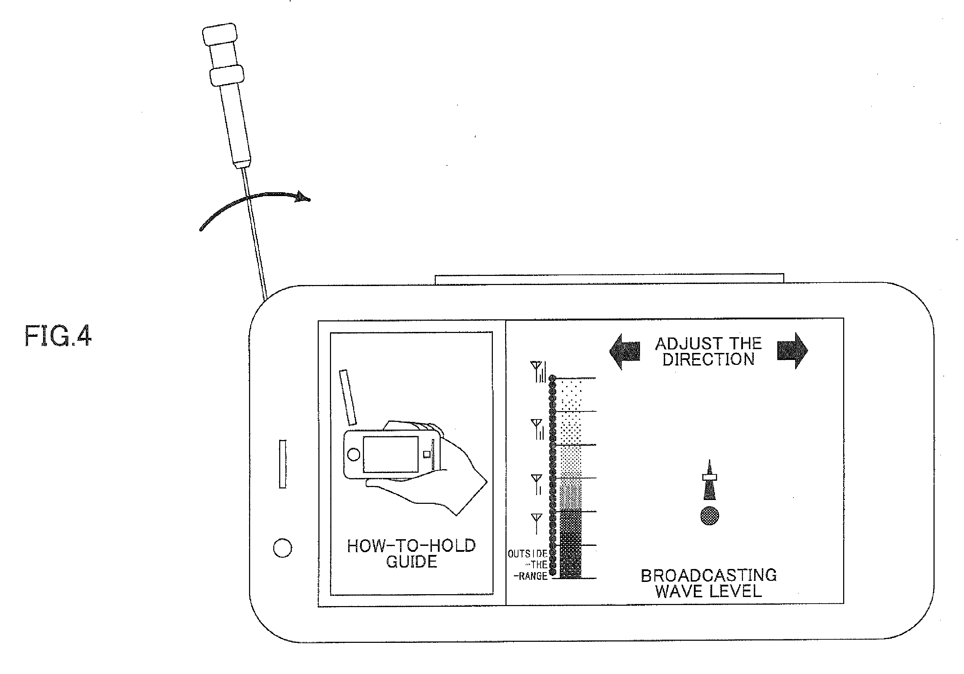

The terminal characteristics information retaining unit 318 retains information on how to hold the mobile communication terminal 100 and how to position the antenna so that the reception level of broadcasting waves becomes the highest. The information on how to hold is, for example, information indicating the way of holding the mobile communication terminal 100 by the user as shown in the display area of "how-to-hold guide" on the screen of the mobile communication terminal 100 illustrated in FIG. 4. The information on how to position the antenna is, for example, information indicating the best position of the movable rod antenna for receiving broadcasting waves. The appropriate way of holding the mobile communication terminal 100 and the antenna position varies with the mobile communication terminal 100. The information retained in the terminal characteristics information retaining unit 318 may be stored in advance, or may be received through the communication unit 300 as necessary.

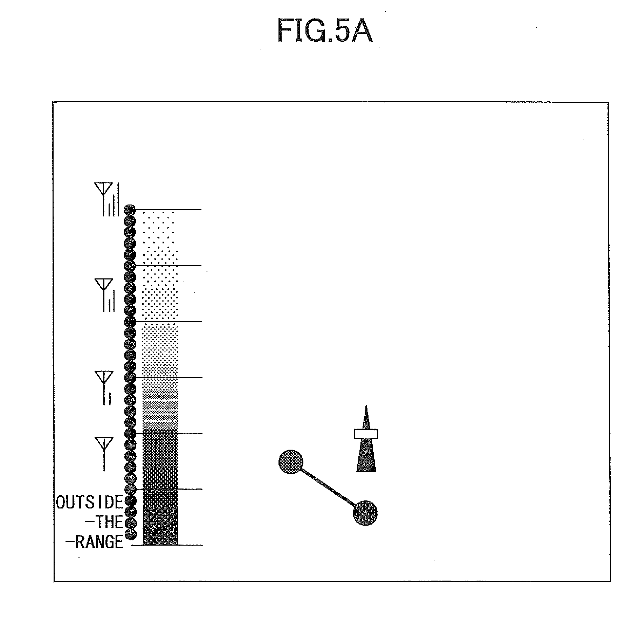

The graph outputting unit 320 outputs azimuth directions and reception levels retained by the log retaining unit 316 as a graph. The graph, in which the azimuth direction is used as the horizontal axis and the reception level is used as vertical axis, indicates the changing of the current and the past reception levels corresponding to the azimuth directions. Also, the graph is outputted in such a way that the reception level currently being detected is plotted in the central part of the screen of the mobile communication terminal 100. Here, the central part may not necessarily be an exact center of the screen, but may have a deviation from the center. An example of the graph is shown in FIG. 5A. FIG. 5A illustrates a screen of the mobile communication terminal 100, and a graph with two plotted dots is outputted, the dots representing a reception level in the current direction of the mobile communication terminal 100 and a reception level in the previous direction. Of the two dots, the one in the center of the screen indicates the current reception level, and the one to the left indicates the past reception level. That is, FIG. 5A illustrates that, assuming that the current direction of the user who holds the mobile communication terminal 100 in his/her hand is the front direction, by changing the direction from the user's left to the front, the reception level has become lower. The horizontal axis of the graph displayed on the screen is limited to a predefined angular range of, for example, plus/minus 45 degrees from the front direction. In order to make it easier for the user to adjust the reception level, the predefined angular range may be set by the user freely.

The graph updating unit 322 updates the outputted graph in the case where the direction of the mobile communication terminal 100 is changed. Or, the graph may be updated at a predefined time interval. In this case, when only reception level is changing even though the direction of the mobile communication terminal 100 is not changing, only the reception level may be updated. By increasing the updating frequency, the user can read from the graph the transition of the reception level changing in accordance with his/her own operation that changes the terminal direction. Also, in the case where the change of the direction of the mobile communication terminal 100 is equal to or less than a predefined angle, assuming that the direction is not changing, the graph may be outputted by only updating the current reception level. The predefined angle may be set at, for example, 5 degrees. In order to be able to ignore the unintended direction change caused by unconscious hand movement of the user, the predefined angle can be freely determined for each user, each type of mobile communication terminal, etc. The details of updating of the outputted graph will be described later.

The display unit 324 includes the how-to-hold displaying unit 326 and the graph displaying unit 328, and displays information viewable by the user.

The how-to-hold displaying unit 326 displays information of the way of holding the mobile communication terminal 100 by the user and of the antenna position on the display device 214. An example of a display is shown in FIG. 4.

The graph displaying unit 328 displays the graph outputted by the graph outputting unit 320 on the screen. To the right of "how-to-hold guide" in FIG. 4, an example of a display is shown. As shown in FIG. 4, the graph displaying unit 328 may include an indicator area for indicating the scale of the reception level of the vertical axis of the graph, or a message area for indicating the message prompting the user to adjust the direction.

The instruction unit 330 instructs the user to change the direction of the terminal through the display unit 324 or a voice outputting unit, not shown in the figure, in the case where the reception level is determined to be lower than a threshold value by the reception level determining unit 308. The instruction unit 330 performs the instruction by, for example as shown in FIG. 4, outputting a message such as "Please adjust the direction" in the message area of the graph displaying unit 328. Also, in the case where the reception level that is equal to or higher than the threshold value is obtained as a result of direction adjustment of the mobile communication terminal 100 by the user, the instruction unit 330 can output the same on the display unit 324.

The character string outputting unit 332, receiving an instruction from the instruction unit 330, outputs a message on the display unit 324 instructing the changing of the terminal direction. Or, the character string outputting unit 332, receiving an instruction from the instruction unit 330, outputs a message on the display unit 324 indicating that the adjustment of the terminal direction is completed.

As seen above, according to the mobile communication terminal 100 of an embodiment of the present invention, in the case of changing the terminal direction for adjusting the reception level, by checking at the same time the reception level that changes in accordance with the operation, the user can understand intuitively the azimuth direction in which the reception level becomes higher. As a result, the azimuth direction in which broadcasting waves can be received best can be searched for efficiently. Also, by displaying how to hold the terminal and how to position the antenna so that the reception level of broadcasting waves becomes the best, it becomes possible to play content in better conditions.

Note that the current location obtaining unit 302 is an optional configuration element. In this case, the communication unit 300 transmits and receives communication waves used for mobile communication systems or mobile communications such as a wireless LAN, etc.

Also, the angle obtaining unit 320 is an optional configuration element. Even in the case of not having the angle obtaining unit 320, the azimuth direction obtained by the azimuth direction obtaining unit 318 can be used for calculating the best azimuth direction.

### (4. Examples of graphic outputs)

Next, referring to FIG. 5A through 5D, a graph that is outputted by the graph displaying unit 328 will be described. As described before, examples of displays illustrated in FIG. 5A through 5D are those displayed in the graph displaying unit 328 that is located to the right side of "how-to-hold guide" in the screen of the mobile communication terminal 100 shown in FIG. 4. Here, it is assumed that the current direction in which the user holding the mobile communication terminal 100 in his/her hand is facing is the front direction and things will be described assuming that there is no change in user's location and posture.

FIG. 5A is an example of a graph after the user has changed his/her direction only once from the initial state. FIG. 5A illustrates that by changing the direction from the initial state to the right direction, the reception level decreased. A mark of a broadcasting station is put to the current reception level of FIG. 5A. The user, by checking this graph, gets an impression that he/she should have moved from the initial state to face in the left direction.

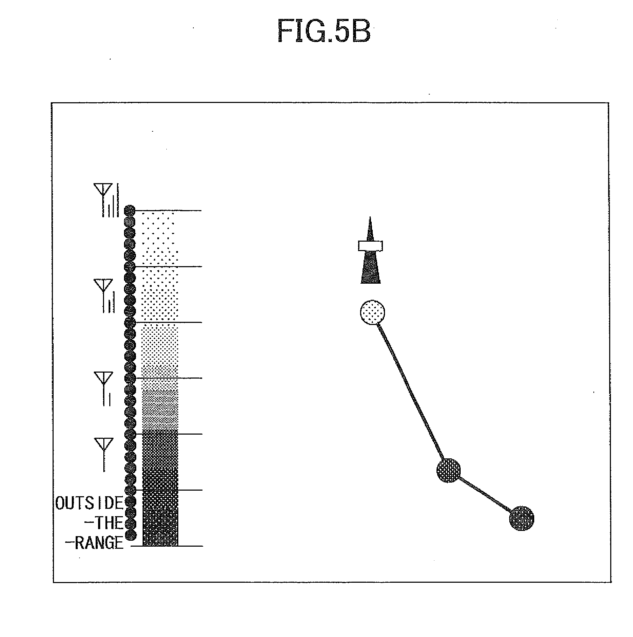

FIG. 5B is an example of a graph after the user has changed his/her direction to the left. It shows that the current direction is facing in a direction further to the left from the initial state and that the reception level has been improved. In this case, note that the current direction and the reception level have been kept being displayed in the center of the screen. The user, by checking this graph, gets an impression that he/she should move further to face in the left direction.

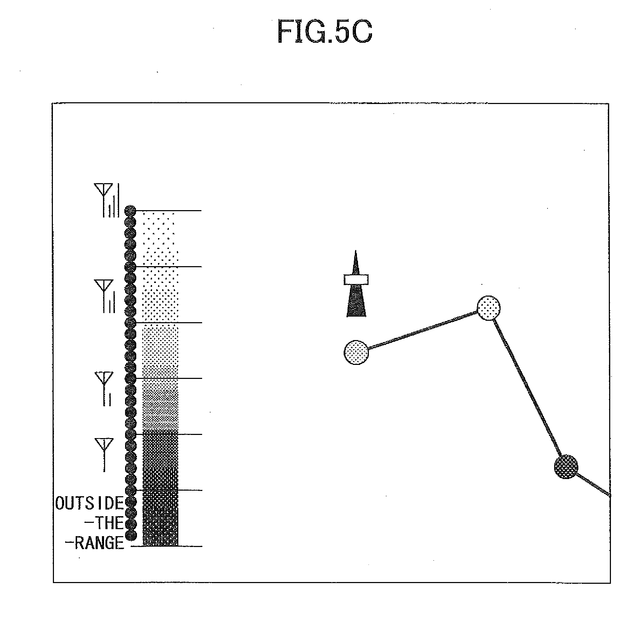

FIG. 5C is an example of a graph after the user has further changed his/her direction to the left direction. It shows that this time the reception level has decreased. In this case, note that the direction and the reception level obtained in FIG. 5A are not displayed in the screen. As described before, it can be freely decided to what extent of the direction range the reception level should be displayed. The user, by checking this graph, gets an impression that he/she should move back to face in the right direction.

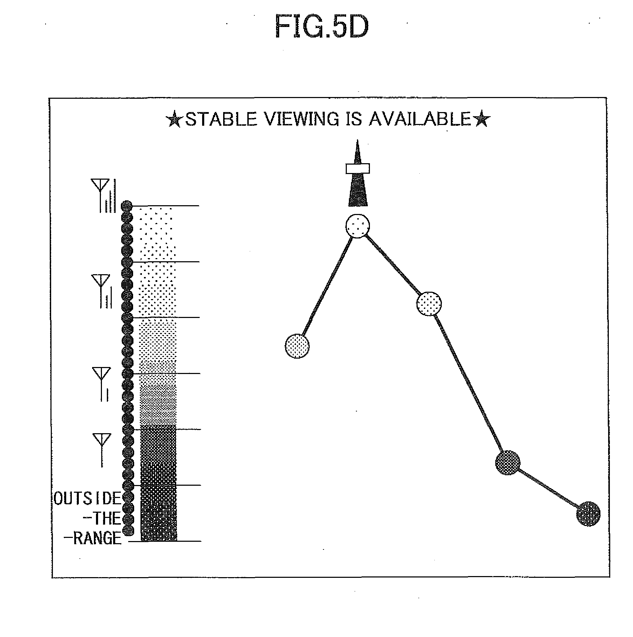

FIG. 5D is an example of a graph after the user has changed the direction of the mobile communication terminal 100 slightly to the right. Here, it is shown that the reception level exceeding a predefined threshold value is obtained.

In this way, according to the mobile communication terminal 100 of an embodiment of the present invention, in the case of changing the direction in order to adjust the reception level, by checking at the same time the reception level that changes corresponding to the direction change, the user can understand intuitively the azimuth direction in which the reception level becomes higher.

Note that, here, an example is shown in which the direction adjustment of the mobile communication terminal 100 is performed based on the five directions and their reception levels obtained at a constant interval. However, by increasing the frequency of obtaining directions and reception levels, and by increasing the frequency of updating the displayed graph, the user becomes capable of knowing much faster the reception level that changes corresponding to the actual operations. As a result, it becomes possible to adjust the direction of the mobile communication terminal 100 more quickly and efficiently.

### (5. Process flow)

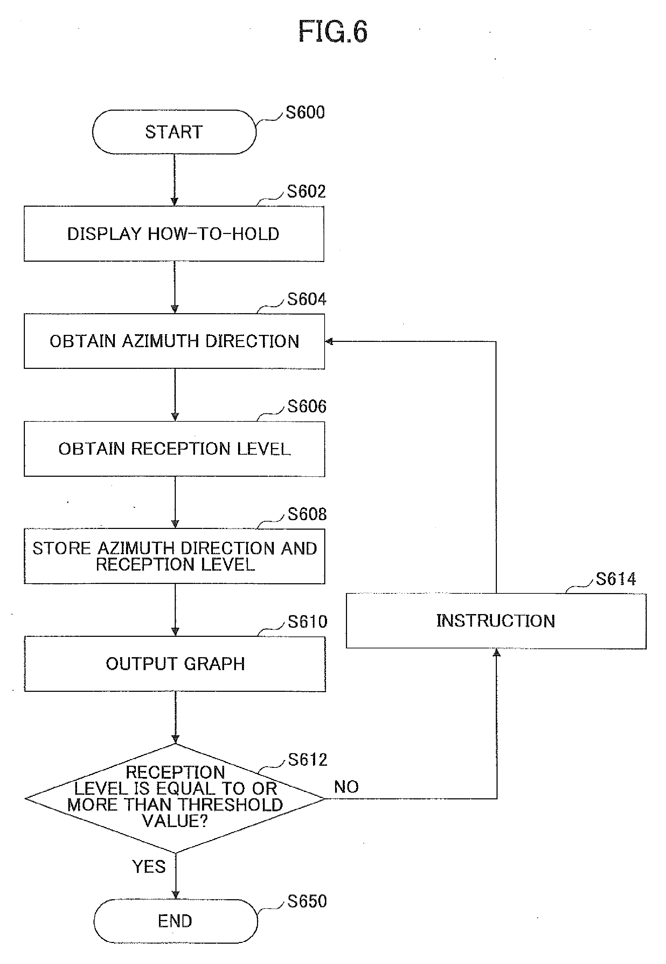

Referring to FIG. 6, the process flow of the mobile communication terminal 100 in an embodiment of the present invention will be described.

In step S600, the process of adjusting the direction of the mobile communication terminal 100 by the user starts.

In step S602, information on how to hold and how to position the antenna so that broadcasting waves are received the best by the mobile communication terminal 100 is displayed in the how-to-hold displaying unit 326. An example of a display is shown in the "how-to-hold guide" of FIG. 4.

In step S604, the azimuth obtaining unit 310 obtains the azimuth direction in which the mobile communication terminal 100 is facing. Also, the current location obtaining unit 302 may obtain the current location.

In step S606, the reception level detecting unit 306 detects the reception level of broadcasting waves.

In step S608, the azimuth direction obtained at the current location and the detected reception level are stored in the log retaining unit 316.

In step S610, the graph outputting unit 320, as described before, outputs a graph through the graph displaying unit 328.

In step S612, the reception level determining unit 308 determines whether the reception level detected at the current location is equal to or more than a threshold value. If the reception level is equal to or more than the threshold value, then it moves to step S650, and if the reception level is less than the threshold value, then it moves to step S614.

In step S614, the instruction unit 330 instructs the user to adjust the direction. The instruction may be provided by, for example, displaying a character string prompting the user to adjust the direction as shown in an example of the graph displaying unit 328 of FIG. 4. Or, guidance that prompts the user to adjust the direction by voice may be played or synthesized. After that, the process moves to step S604.

After step S614, in step S604 through S610, using newly obtained azimuth directions and reception levels, the graph is updated and outputted. Previously obtained azimuth directions and reception levels are outputted as log information in the graph. Here, in the case of having a means for obtaining the current location information, in the case where the current location is changed due to the user's movement after the beginning of the direction adjustment process, the log stored in step S608 may first be deleted and the obtaining of azimuth directions may be started again from step S604.

In step S650, the process ends.

In this way, according to the mobile communication terminal 100 of an embodiment of the present invention, in the case of changing the direction in order to adjust the reception level, by checking at the same time the reception level that changes corresponding to the direction change, the user can understand intuitively the azimuth direction in which the reception level becomes higher.

Note that the sequence of steps S604 and S605 is arbitrary.

Also, the sequence of steps S608 and S610 is arbitrary.

Also, in step S612, in the case where the reception level is equal to or more than the threshold value, the instruction unit 330 may display on the screen that the adjustment is completed and the reception level of broadcasting waves has met a certain level as shown in FIG. 5D. By this, the user is able to understand clearly that the adjustment is completed.

Also, step S616 may be omitted. That is, the user is able to adjust the direction of the mobile communication terminal 100 only by using the graph displayed on the screen.

Note that the above processes of step S600. through S650 can be implemented by a computer executing the processes as a mobile communication program. The mobile communication program may be provided in such a way that the program is recorded in a recording medium such as a flexible disk, a CD-ROM, a memory card, etc.

A mobile communication terminal, A mobile communication method, a mobile communication program and a recording medium are described above referring to the present embodiments, but the present invention is not limited to the embodiments above, but various modifications and improvements are available within the scope of the present invention. The present embodiments are described using specific numbers in order to facilitate understanding of the invention, but these numbers are used just as an example and, unless otherwise noted, any appropriate number can be used. Borders of function units or processing units in functional block diagrams do not necessarily correspond to borders of physical components. Operations of multiple function units may be performed in one physical component, or operations of one function unit may be performed by multiple physical components. For the sake of convenience, devices of the present embodiments are described using a functional block diagram, but those devices may be realized as hardware, software, or combination of both. The software may be provided in a Random Access Memory (RAM), a Flash memory, a Read-Only Memory (ROM), an EPROM, an EEPROM, a register, a hard disk (HDD), a removable disk, a CD-ROM, a database, a server, or any other memory media.

The present application is based on and claims the benefit of priority of Japanese Priority Application No. 2011-256420 filed on November 24, 2011 the entire contents of which are hereby incorporated by reference.

### DESCRIPTION OF THE REFERENCE NUMERALS

100 Mobile communication terminal
300 Communication unit
302 Current location obtaining unit
304 Broadcasting wave receiving unit
306 Reception level detecting unit
308 Reception level determining unit
310 Azimuth direction obtaining unit
312 Angle obtaining unit
314 Memory unit
316 Log retaining unit
318 Terminal characteristics information retaining unit
320 Graph outputting unit
322 Graph updating unit
324 Display unit
326 How-to-hold displaying unit
328 Graph displaying unit
330 Instruction unit
332 Character string outputting unit

## Claims

1. A mobile communication terminal for receiving broadcasting waves of television broadcasting, the mobile communication terminal comprising:
an azimuth direction obtaining unit configured to obtain an azimuth direction in which the mobile communication terminal is facing,
a reception level detecting unit configured to detect a reception level of the broadcasting waves at the azimuth direction,
a log retaining unit configured to retain as log information the reception level associated with the azimuth direction,
a graph displaying unit configured to display a graph that has at least an axis of the azimuth direction and an axis of the reception level and that shows the reception level currently being detected and the reception level detected in the past in such a way that the reception level currently being detected is plotted in the central part of a screen of the mobile communication terminal, and
a graph updating unit configured to update the graph according to a change of the azimuth direction in which the mobile communication terminal is facing or according to a change of the reception level.

2. The mobile communication terminal as claimed in claim 1, wherein in the case where the change of the azimuth direction in which the mobile communication terminal is facing is equal to or less than a predefined angle, the graph is displayed by updating only the reception level currently being detected.

3. The mobile communication terminal as claimed in claim 1, wherein a horizontal axis of the graph displayed on the screen is limited to a predefined angle range.

4. The mobile communication terminal as claimed in claim 1, further comprising an instruction unit, wherein in the case where the reception level currently being detected is less than a predefined threshold value, the instruction unit instructs a user to adjust the azimuth direction in which the mobile communication terminal is facing.

5. The mobile communication terminal as claimed in claim 1, further comprising a how-to-hold displaying unit configured to display, in parallel with the graph, how to hold the mobile communication terminal and how to position an antenna so that the reception level becomes the best.

6. A mobile communication method to be implemented by a mobile communication terminal for receiving broadcasting waves of television broadcasting, the mobile communication method comprising:
an azimuth direction obtaining step of obtaining an azimuth direction in which the mobile communication terminal is facing,
a reception level detecting step of detecting a reception level of the broadcasting waves at the azimuth direction,
a log retaining step of retaining as log information the reception level associated with the azimuth direction,
a graph displaying step of displaying a graph that has at least an axis of the azimuth direction and an axis of the reception level and that shows the reception level currently being detected and the reception level detected in the past in such a way that the reception level currently being detected is plotted in the central part of a screen of the mobile communication terminal, and
a graph updating step of updating the graph according to a change of the azimuth direction to which the mobile communication terminal is facing or according to a change of the reception level.

7. A mobile communication program to be executed by a mobile communication terminal for receiving broadcasting waves of television broadcasting, the mobile communication program causing a computer to execute:
an azimuth direction obtaining step of obtaining an azimuth direction in which the mobile communication terminal is facing,
a reception level detecting step of detecting a reception level of the broadcasting waves at the azimuth direction,
a log retaining step of retaining as log information the reception level associated with the azimuth direction,
a graph displaying step of displaying a graph that has at least an axis of the azimuth direction and an axis of the reception level and that shows the reception level currently being detected and the reception level detected in the past in such a way that the reception level currently being detected is plotted in the central part of a screen of the mobile communication terminal, and
a graph updating step of updating the graph according to a change of the azimuth direction in which the mobile communication terminal is facing or according to a change of the reception level.

8. A computer-readable non-volatile recording medium having a mobile communication program to be implemented by a mobile communication terminal for receiving broadcasting waves of television broadcasting embodied therein for causing a computer to execute:
an azimuth direction obtaining step of obtaining an azimuth direction in which the mobile communication terminal is facing,
a reception level detecting step of detecting a reception level of the broadcasting waves at the azimuth direction,
a log retaining step of retaining as log information the reception level associated with the azimuth direction,
a graph displaying step of displaying a graph that has at least an axis of the azimuth direction and an axis of the reception level and that shows the reception level currently being detected and the reception level detected in the past in such a way that the reception level currently being detected is plotted in the central part of a screen of the mobile communication terminal, and
a graph updating step of updating the graph according to a change of the azimuth direction in which the mobile communication terminal is facing or according to a change of the reception level.
